# EUROPEAN PATENT APPLICATION

(11) **EP 2 460 718 A1**
(43) Date of publication of application: **06.06.2012**
(21) Application number: 10193485.9
(22) Date of filing: 02.12.2010
(51) Int. Cl.: B62M 6/50, B62M 3/00

(54) **Torque sensor for bottom bracket axle and method using the same**

(71) Applicant: J.D Components Co., Ltd., Shou Shui Hsiang, Chang Hua Hsien (TW)
(72) Inventor: Zhang, Bin, LIANZHOU CITY Guangdong (CN); Hsu, Yuan-Fang, 300, HSINCHU CITY (TW)
(74) Representative: Becker Kurig Straus

(57) **Abstract**

A torque detecting system (10) for a bottom bracket axle (22) of a power-assisted bicycle (20) includes a torque sensor (70) for being mounted on the bottom bracket axle (22) of the bicycle (20), a wireless signal transmitter (42) arranged stationarily relative to the bottom bracket axle, and a wireless signal receiver (44) for being arranged at a location of a bicycle frame of the bicycle (20) in proximity to the bottom bracket axle. The wireless signal transmitter (42) is adapted for receiving a detected signal, which is outputted from the torque sensor (70), and then transmitting the detected signal to the wireless signal receiver (44) wirelessly. In this way, the signal attenuation and the possibility of signal loss of the detected signal can be minimized during the signal transmission, such that the torque applied on the bottom bracket axle by the bicyclist can be detected precisely.

## Description

### BACKGROUND OF THE INVENTION

### 1. Field of the Invention

The present invention relates generally to a torque detecting system for a bicycle, and more specifically to a torque detecting system for a bottom bracket axle of a power-assisted bicycle and a two-phase signal transmitting method using the aforesaid torque detecting system.

### 2. Description of the Related Art

A conventional electrical power-assisted bicycle is equipped with an electrical motor adapted either to power the bicycle or to assist with pedaling. Usually, the power-assisted bicycle has a built-in torque detecting system including a strain gauge for detecting a torque applied on the bicycle, and a controller for determining whether or not the power applied on the pedal by the bicyclist is sufficient based on the detected torque. In a conventional design, the strain gauge is attached on a bicycle frame of the power-assisted bicycle in order to transmit the detected signal to the controller precisely. This design has however a drawback that the power applied on the bicycle by the bicyclist to the bicycle can not be measured precisely by reference to the torque received by the bicycle frame. In another conventional design, the strain gauge is attached on a bottom bracket axle connected with a crank that is driven by a pedal and the detected signal of the strain gauge is transmitted to the controller through a transducer mounted on the bicycle frame, such that the power applied on the bicycle by the bicyclist can be more precisely measured by reference to the detected signal of the strain gauge. However, this design has problems of signal attenuation and signal loss in the process of signal transmission because the strain gauge will move along with the rotary bottom bracket axle and the transducer is kept away from the strain gauge a certain distance, resulting in controller's miscalculation about the power applied by the bicyclist. In other words, it is desirable to provide a torque detecting system for a power-assisted bicycle, which can eliminate the aforesaid drawbacks.

### SUMMARY OF THE INVENTION

It is one object of the present invention to provide a torque detecting system for a bottom bracket axle of a power-assisted bicycle and a two-phase signal transmitting method using the system, which can precisely detect the torque applied on the bottom bracket axle by the bicyclist.

To achieve the above-mentioned object of the present invention, the torque detecting system provided by the present invention comprises a torque sensor, which is adapted for being mounted on a bottom bracket axle of a power-assisted bicycle, a wireless signal transmitter, which is arranged stationarily relative to the bottom bracket axle and electrically connected with the torque sensor for receiving a detected signal outputted from the torque sensor and then transmitting the detected signal wirelessly, and a wireless signal receiver, which is adapted for being arranged at a location of a bicycle frame of the power-assisted bicycle in proximity to the bottom bracket axle for receiving the detected signal transmitted from the wireless signal transmitter and then outputting the detected signal. In this way, the detected signal outputted from the torque sensor can be sent to a controller through the wireless signal transmitter and the wireless signal receiver in succession, such that the signal attenuation and the possibility of signal loss of the detected signal can be minimized during the process of signal transmission. As a result, the torque applied on the bottom bracket axle by the bicyclist can be detected precisely by the torque detecting system of the present invention and served as a reference for the controller's determination.

One aspect of the present invention is to provide a two-phase signal transmitting method using the above-mentioned torque detecting system. The method comprises the steps of a) wirelessly transmitting the detected signal outputted from the torque sensor to the wireless signal receiver that is stationary by the wireless signal transmitter that is moveable, and b) wiredly or wirelessly transmitting the detected signal to a controller that is stationary by the wireless signal receiver.

### BRIEF DESCRIPTION OF THE DRAWINGS

The present invention will become more fully understood from the detailed description given herein below and the accompanying drawings which are given by way of illustration only, and thus are not limitative of the present invention, and wherein:
FIG. 1 is a schematic drawing showing that a torque detecting system according to a preferred embodiment of the present invention is installed in a power-assisted bicycle;
FIG. 2 is a schematic sectional view showing that the torque detecting system of the preferred embodiment of the present invention is installed in a bottom bracket shell and a bottom bracket axle, and
FIG. 3 is a simplified block diagram of the torque detecting system of the preferred embodiment of the present invention.

### DETAILED DESCRIPTION OF THE INVENTION

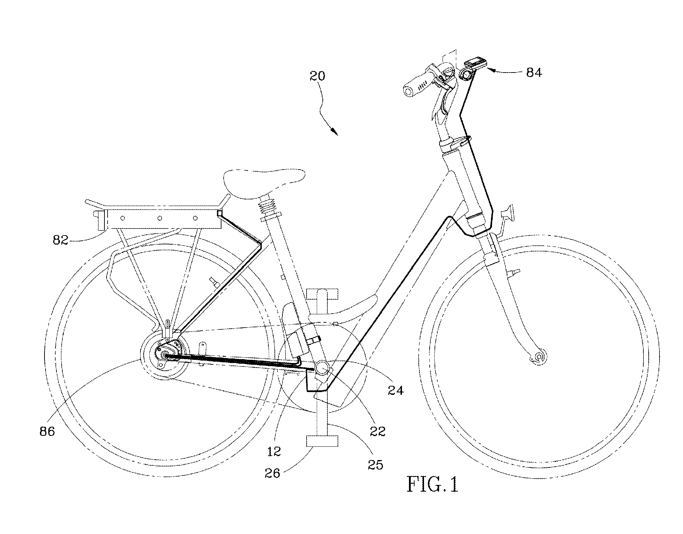

As shown in FIGS. 1-2, the torque detecting system, denoted by reference numeral 10, is adapted for being installed with a bottom bracket axle 22 and a bottom bracket shell 24 of a power-assisted bicycle 20. The torque detecting system 10 comprises a first bracket 31, a second bracket 32, a wireless signal transmitter 42, a wireless signal receiver 44, an application-specific circuit 50, a transformer 60, and a torque sensor 70. The features and mechanical and/or electrical relationships of the aforesaid elements of the system 10 will be detailedly depicted as follows.

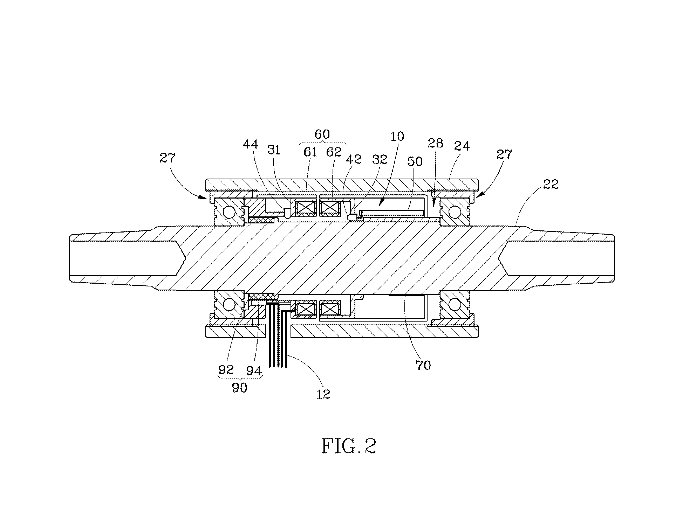

The bottom bracket axle 24 is rotatably inserted through the bottom bracket shell 22 which is a stationary part of a bicycle frame of the power-assisted bicycle 20. The bottom bracket axle 24 has two ends, each of which is connected with a crank 25 that is in turn connected with a pedal 26 that is to be trodden by a bicyclist of the power-assisted bicycle 20, such that the torque generated from bicyclist's treading force applying on the pedals 26 by the length of the cranks 25 will drive the bottom bracket axle 24 to rotate. In addition, as shown in FIG. 2, the bottom bracket axle 24 is supported by two bearings 27, which are mounted inside the bottom bracket shell 24, such that the bottom bracket axle 22 is rotatable relative to the bottom bracket shell 24 but can not move axially. A receiving space 28 is defined between the two bearings 27 and between the outer periphery of the bottom bracket axle 22 and the inner periphery of the bottom bracket shell 24 for accommodating the torque detecting system 20 therein.

The first bracket 31 is fixedly mounted to the bottom bracket shell 24, which is a part of the bicycle frame of the power-assisted bicycle 20, such that the first bracket 31 is stationary relative to the bicycle frame. The second bracket 32 is fixedly mounted onto the bottom bracket axle 22, such that the second bracket 32 is moveable along with the bottom bracket axle 22 along a circular path. The wireless signal receiver 44 is fixedly mounted to the first bracket 31, and the wireless signal transmitter 42 is fixedly mounted to the second bracket 32 and able to transmit signal to the wireless signal receiver 44 by infrared rays or electromagnetic waves so as to realize the function of wireless signal transmission.

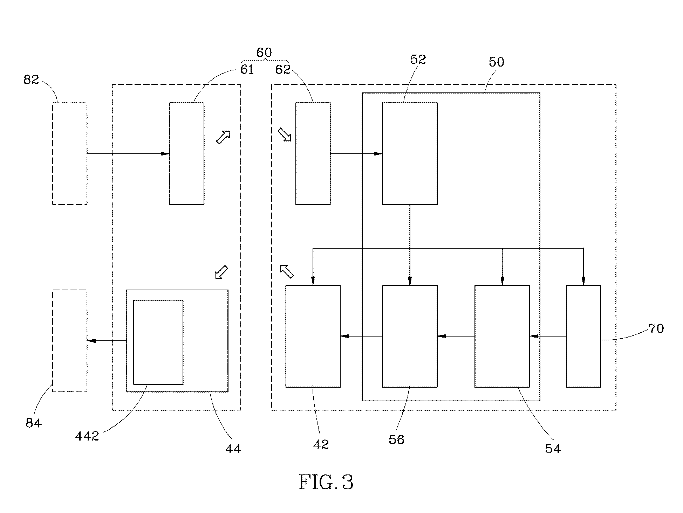

The application-specific circuit 50 is fixedly mounted on the second bracket 32, such that the circuit 50 is stationary relative to the bottom bracket axle 22. As shown in FIG. 3, the application-specific circuit 50 comprises a rectifying and voltage-stabilizing unit 52, a signal amplifying unit 54 and a signal modulating unit 56, which are electrically connected thereamong. The rectifying and voltage-stabilizing unit 52 is electrically connected with the wireless signal transmitter 42, the transformer 60 and the torque sensor 70. The signal modulating unit 56 is electrically connected with the wireless signal transmitter 42 and adapted to modulate the received signal into a digital form that is suitable for wireless transmission and then to transmit the modulated signal to the wireless signal transmitter 42.

The transformer 60 comprises a first conductor 61 fixedly mounted on the first bracket 31, and a second conductor 62 fixedly mounted on the second bracket 32. The first conductor 61 is a primary coil formed by an enameled wire having a number of turns, and is electrically connected with a power supply 82 through a cable 12. The second conductor 62 is a secondary coil formed by an enameled wire having a number of turns, and is electrically connected with the rectifying and voltage-stabilizing unit 52 of the application-specific circuit 50. The first conductor 61 is spaced from the second conductor 62 at a distance. When the second conductor 62 is moved along with the bottom bracket axle 22 along a circular path relative to the first conductor 61, the alternate current supplied by the power supply 82 to the first conductor 61 will be inductively coupled to the second conductor 62, such that an induced alternate current will be generated in the second conductor 62 and then conveyed to the signal amplifying unit 54, the signal modulating unit 56, the wireless signal transmitter 42 and the torque sensor 70 through the rectifying and voltage-stabilizing unit 52 after the induced alternated current is processed by the rectifying and voltage-stabilizing unit **50** to have a stable voltage.

For the torque sensor **70,** a conventional resistive type strain gauge can be used. The torque sensor **70** is attached on the bottom bracket axle **22** for detecting a micro deformation of the axle **22** due to the torque applied on the axle **22** by a bicyclist and outputting a corresponding detected signal to the application-specific circuit **50.** The detected signal outputted from the torque sensor **70** will be amplified by the signal amplifying unit **54,** modulated into digital form by the signal modulating unit **56,** and then transmitted to the wireless signal receiver **44** through the wireless signal transmitter **42.** After the wireless signal receiver **44** receives the signal, a signal demodulating unit **442** of the wireless signal receiver **44** will demodulate the signal into an analog form and then the demodulated signal will be sent to a controller **84** through the cable **12.** Alternatively, the wireless signal receiver **44** can transmit the detected signal to the controller **84** wirelessly through infrared rays or electromagnetic waves.

By means of the torque detecting system **10** provided by the present invention, the controller **84** can receive the detected signal sent by the torque sensor **70** so as to learn the torque applied on the bottom bracket axle **22** and then to control, on the basis of the detected signal, an output power of a motor for aiding power to the bicycle **20.** Since the detected signal of the torque sensor **70** is sent to the wireless signal transmitter **42** that is stationarily arranged relative to the torque sensor **70** and the wireless signal receiver **44** is spaced at a small distance from the wireless signal transmitter **42,** the signal attenuation and the possibility of signal loss of the detected signal can be minimized in the signal transmitting process though the wireless signal transmitter **42** is moveable along a circular path relative to the wireless signal receiver 44. As a result, the torque applied on the bottom bracket axle 22 by the bicyclist can be measured precisely.

On the other hand, as shown in FIG. 2, the torque detecting system 10 of the present invention can further comprise a revolution sensor 90 including a magnetic ring 92 fixedly sleeved onto the bottom bracket axle 22, and an electronic sensing element 94, which is realized by a Hall integrated circuit in this embodiment. The electronic sensing element 94 is fixedly mounted on the first bracket 31 and able to read the revolving signal of the magnetic ring 92 and then send the revolving signal to the controller 84 through the cable 12 for enabling the controller 84 to acquire the revolution of the bottom bracket axle 22.

In the above-mentioned embodiment, the first bracket 31 is used for supporting the first conductor 61 of the transformer 60 and the wireless signal receiver 44 in such a way that the first conductor 61 and the wireless signal receiver 44 are close to the bottom bracket axle 22 and prohibited to move along with the bottom bracket axle 22. However, the first bracket 31 can be eliminated if the first conductor 61 and the wireless signal receiver 44 are directly mounted to the bottom bracket shell 24, the crank 25 or a location of the bicycle frame of the bicycle 20 in proximity to the bottom bracket axle 22. On the other hand, the second bracket 32 can also be eliminated if the wireless signal transmitter 42 and the second conductor 62 of the transformer 60 are directly mounted on the bottom bracket axle 22.

From the above-mentioned description, it will be clearly understood that a feature of the present invention lies in that the signal is transmitted in two phases from the wireless signal transmitter 42 to the controller 84. Specifically speaking, the present invention provides a two-phase signal transmitting method comprising the steps of using the wireless signal transmitter 42 that is moveable relative to the bottom bracket shell **24** to wirelessly transmit the detected signal sent from the torque sensor **70** to the wireless signal receiver **44** that is stationary, and using the wireless signal receiver **44** to transmit the detected signal to the controller **84** that is stationary wiredly or wirelessly. In addition, the distance between the wireless signal transmitter **42** and the wireless signal receiver **44** is smaller than the distance between the wireless signal receiver **44** and the controller **84** such that the signal attenuation and the possibility of signal loss of the detected signal can be minimized in the signal transmitting process.

## Claims

1. A torque detecting system (10) having a torque sensor (70) for being mounted on a bottom bracket axle (22) of a power-assisted bicycle (20); **characterized in that** the torque detecting system (10) comprises:
a wireless signal transmitter (42) arranged stationarily relative to the bottom bracket axle (22) and electrically connected with the torque sensor (70) for receiving a detected signal outputted from the torque sensor and transmitting the detected signal wirelessly, and
a wireless signal receiver (44) for being arranged at a location of a bicycle frame of the power-assisted bicycle in proximity to the bottom bracket axle for receiving the detected signal transmitted from the wireless signal transmitter (42) and then outputting the detected signal.

2. The torque detecting system as claimed in claim 1, **characterized in that** the torque detecting system furthering comprises a transformer (60) including a first conductor (61) arranged stationarily relative to a bottom bracket shell (24) of the power-assisted bicycle and electrically connected with a power supply (82), and a second conductor (62) arranged stationarily relative to the bottom bracket axle (22) such that the second conductor is moveable along with the bottom bracket axle relative to the first conductor for conveying an electrical power from the power supply through the first conductor to the torque sensor (70) and the wireless signal transmitter (42).

3. The torque detecting system as claimed in claim 2, **characterized in that** the torque detecting system further comprises an application-specific circuit (50), which is arranged stationarily relative to the bottom bracket axle and electrically connected with the second conductor (62) of the transformer (60), the torque sensor (70) and the wireless signal transmitter (42); wherein the application-specific circuit comprises a rectifying and voltage-stabilizing unit (52), a signal amplifying unit (54) and a signal modulating unit (56).

4. The torque detecting system as claimed in claim 3, **characterized in that** the wireless signal receiver (44) comprises a signal demodulating unit (442).

5. The torque detecting system as claimed in claim 2, **characterized in that** the first conductor (61) of the transformer (60) is electrically connected with the power supply (82) through a cable (12) for receiving an alternate current from the power supply.

6. The torque detecting system as claimed in claim 2, **characterized in that** the torque detecting system further comprises a first bracket (31) for being fixedly mounted in the bottom bracket shell (24) through which the bottom bracket axles (22) is rotatably inserted; wherein the wireless signal receiver (44) and the first conductor (61) of the transformer (60) are fixedly mounted to the first bracket (31).

7. The torque detecting system as claimed in claim 6, **characterized in that** the torque detecting system further comprises a revolution sensor (90), which includes a magnetic ring (92) for being fixedly mounted to the bottom bracket axle (22), and an electronic sensing element (94) mounted to the first bracket (31).

8. The torque detecting system as claimed in claim 6, **characterized in that** the torque detecting system further comprises a second bracket (32) for being fixedly mounted to the bottom bracket axle (22); wherein the wireless signal transmitter (42) and the second conductor (62) of the transformer (60) are fixedly mounted to the second bracket (32).

9. The torque detecting system as claimed in claim 1, **characterized in that** the wireless signal receiver (44) is arranged on a bottom bracket shell (24) through which the bottom bracket axle (22) is inserted, a crank (25) connected between the bottom bracket axle (22) and a pedal (26), or a stationary location of the bicycle frame in proximity to the bottom bracket axle (22).

10. The torque detecting system as claimed in claim 1, **characterized in that** the wireless signal transmitter (42) transmits the detected signal wirelessly through electromagnetic waves or infrared rays.

11. The torque detecting system as claimed in claim 1, **characterized in that** the wireless signal receiver (44) transmits the detected signal to a controller (84) wiredly or wirelessly.

12. The torque detecting system as claimed in claim 11, **characterized in that** the controller (84) controls an output power of a motor (86) based on the detected signal.

13. A two-phase signal transmitting method using the torque detecting system (10) of claim 1, **characterized in that** the two-phase signal transmitting method comprises the steps of:
a) wirelessly transmitting the detected signal outputted from the torque sensor (70) to the wireless signal receiver (44) that is stationary by the wireless signal transmitter (42) that is moveable, and
b) wiredly transmitting the detected signal to a controller (84) that is stationary by the wireless signal receiver (44).

14. A two-phase signal transmitting method using the torque detecting system (10) of claim 1, **characterized in that** the two-phase signal transmitting method comprises the steps of:
a) wirelessly transmitting the detected signal outputted from the torque sensor (70) to the wireless signal receiver (44) that is stationary by the wireless signal transmitter (42) that is moveable, and
b) wirelessly transmitting the detected signal to a controller (84) that is stationary by the wireless signal receiver (44).

15. The two-phase signal transmitting method of claim 13 or 14, **characterized in that** a distance between the wireless signal transmitter (42) and the wireless signal receiver (44) is smaller than a distance between the wireless signal receiver (44) and the controller (84).
